# EUROPÄISCHE PATENTSCHRIFT

(11) **EP 2 477 018 B1**
(45) Veröffentlichungstag und Bekanntmachung des Hinweises auf die Patenterteilung: **18.04.2018**
(21) Anmeldenummer: 12405007.1
(22) Anmeldetag: 16.01.2012
(51) Int. Cl.: G01L 5/22, G01L 9/00, B62D 1/04, B62D 1/06

(54) **Vorrichtung zum Aufnehmen der Schwankung des Innendrucks in einem flexiblen flüssigkeitsgefüllten Schlauch und deren Anwendung in einem Lenkorgan eines Fahrzeugs**
Device for absorbing the fluctuation of the internal pressure in a flexible liquid-filled tube and use of same in a steering element of a vehicle
Dispositif destiné à recevoir le basculement de la pression interne dans un tuyau flexible rempli de liquide et son utilisation dans un organe de direction d'un véhicule

(30) Priorität: 17.01.2011 CH 812011
(43) Veröffentlichungstag der Anmeldung: 18.07.2012
(73) Patentinhaber: Erbicol SA, 6828 Balerna (CH)
(72) Erfinder: Gilardi, Piero Enrico, 27038 Robbio (PV) (IT)
(74) Vertreter: Biazzi, Riccardo

(56) Entgegenhaltungen:
- WO-A1-98/30411
- WO-A1-98/54555
- DE-A1- 3 020 323
- DE-A1-102009 019 663

## Beschreibung

Die vorliegende Erfindung betrifft eine Vorrichtung zum Aufnehmen der Schwankung des in einem flexiblen, mit Flüssigkeit gefüllten Schlauch herrschenden Innendrucks und deren Anwendung in einem Lenkorgan eines Fahrzeugs als Sicherheits-Vorrichtung zum Vergrössern der Reaktionsgeschwindigkeit des Lenkers im Fall von Kollisionsgefahr mit anderen Fahrzeugen, Personen oder Tieren.

Die Anwendung ähnlicher Sicherheits-Vorrichtungen, sowohl bei Motorrädern als in Automobilen, basierend auf der Aufnahme der Druckschwankung in einem flexiblen flüssigkeitsgefüllten Schlauch ist gemäss dem aus dem in der Patentliteratur gezeigten Stand der Technik bekannt aus einer ganzen Reihe von Vorschlägen, deren wesentlichste hier aufgelistet sind:
- EP-1621442 "Lenksteuerung für selbstbewegende Fahrzeuge", welche die Anwendung von zwei hydraulischen oder pneumatischen Sensoren zeigt, die im Wesentlichen über den gesamten Bereich der Lenksteuerung erstrecken, die aus dem Lenkrad eines Fahrzeugs besteht, und als Stand der Technik auch die vorangehende EP-9616911A2 nennt;
- Die Schweizerische Patentanmeldung Nr. 2008 1135/08, welche ein Verfahren zum Füllen des elastischen Schlauchs mit Flüssigkeit in einem Drucksensor sowie die entsprechende Vorrichtung und die Anwendung des genannten Sensors;
- EP-2261625 betreffend ein Verfahren zum Tarieren einer Vorrichtung mit einem flexiblen, mit Flüssigkeit vorgespannten Schlauch, die mit einem DruckSensor verbunden ist.

Alle diese Dokumente basieren auf dem Prinzip, dass der mit Flüssigkeit vorgefüllte und/oder vorgespannte flexible Schlauch an seinem einen Ende verschlossen ist und an seinem andern Ende mit einem Drucksensor verbunden ist, mittels welchem die durch den Lenker von aussen ausgeübten Druckschwankungen gegenüber beispielsweise dem im vorgespannten Schlauch herrschenden Innendruck dazu verwendet werden, vorbestimmte Funktionen der Fahrzeug-Lenkung zu aktivieren.

In der Praxis hat sich erwiesen, dass alle diese Verfahren zur Bestimmung der Schwankung des in einem flexiblen flüssigkeitsgefüllten Schlauch herrschenden Drucks auf der Basis, dass ein Ende des flexiblen Schlauchs direkt mit dem mit dem Ducksensor verbunden ist, noch Nachteile aufweisen, die die Genauigkeit der Messung beeinträchtigen können. Dabei geht es darum, dass am Ort der Verbindung des Schlauchs mit dem Drucksensor kleine Flüssigkeitsverluste auftreten können, die einerseits die Genauigkeit der Messung des Druckes beeinflussen können, und anderseits wegen des Kontaktes zwischen der Flüssigkeit und den empfindlichen Elementen des Sensors, was den Sensor bis zu dessen vollständigem Ausfallen beschädigen kann. Darüber hinaus erweist sich die bekannte Lösung als eher kompliziert und sowohl bezüglich Herstellung als aufwendig bezüglich der Operationen zum Auffüllen des Schlauchs mit Flüssigkeit und des Unterhalts, bzw. der Behebung allfälliger Funktionsstörungen. Nicht zu vergessen ist, dass die ganze Vorrichtung normalerweise in ein Lenkrad eines Automobils oder in die Lenkstange eines Motorrades eingebaut wird, so dass es praktisch unmöglich wird, die Ursachen fehlerhafter Funktionen zu beheben, ohne das ganze Lenkorgan des Fahrzeugs auszuwechseln.

Weitere Vorrichtungen gemäss dem naheliegenden Stand der Technik sind aus den Entgegenhaltungen DE 10 2009 019 663, WO 98/30411 und WO 98/54555 bekannt.

Ziel der vorliegenden Erfindung ist, die genannten Nachteile der bekannten Lösungen zu eliminieren und eine Vorrichtung zum Aufnehmen der Schwankung des in einem flexiblen flüssigkeitsgefüllten Schlauch herrschenden Druckes vorzuschlagen, die einfach in der Auslegung und kostengünstig in der Montage und im Unterhalt sein soll, und die absolute Genauigkeit der Funktion auch über lange Zeitspannen gewährleisen soll, dies vor allem dank der Anordnung, dass die Flüssigkeit, welche den flexiblen Schlauch füllt, auf keinen Fall direkt mit dem Drucksensor in Kontakt treten kann.

Diese Ziele werden erreicht mittels einer Vorrichtung gemäss der Beschreibung im Oberbegriff des Anspruchs 1 und mit den Eigenschaften gemäss dem kennzeichnenden Teil des Anspruchs 1.

Die wesentlichen Faktoren, die die Erfindung kennzeichnen bestehen darin, dass beide Enden des flexiblen Schlauches hermetisch verschlossen sind, und dass die Schwankung des im Schlauch herrschenden Innendrucks mittels eines Dehnungsmessers (Extensiometers) aufgenommen wird, der an der Aussenseite des Schlauches misst und praktisch an jedem Punkt des flexiblen Schlauchs angebracht werden kann, wobei der Begriff Dehnungsmesser ein gemäss dem Stand der Technik bekanntes und auf dem Markt erhältliches Messgerät ist, dessen Deformationen durch Verlängerung und/oder Biegung in ein elektrisches Signal umgesetzt werden, dessen Stärke ein Mass für die Kraft darstellt, die auf das Gerät ausgeübt wird, im vorliegenden speziellen Fall also der Druck, der im flexiblen Schlauch herrscht.

Die abhängigen Ansprüche 2 bis 5 betreffen sodann Verbesserungen der Grundidee, während sich die Unteransprüche 6 bis 9 auf bevorzugte Anwendungen des Erfindungsgegenstandes beziehen.

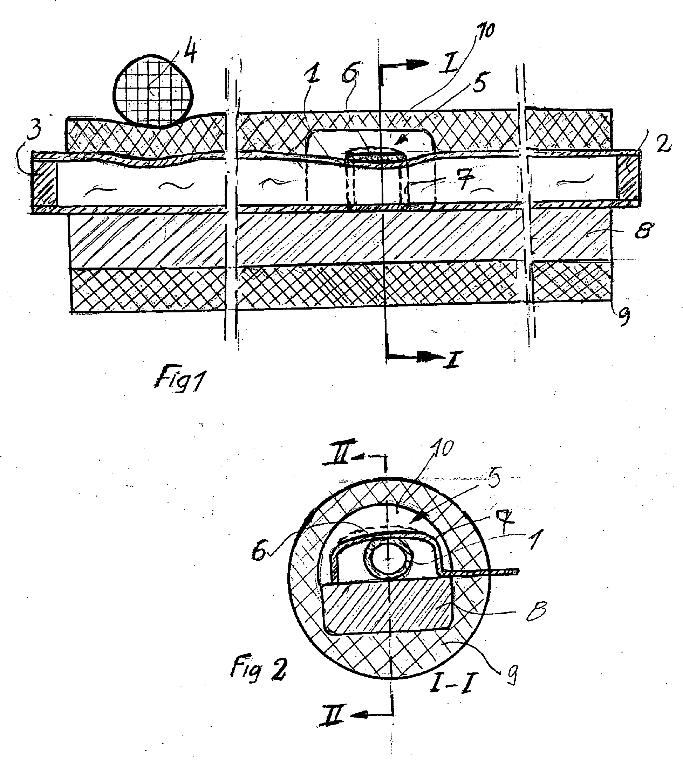

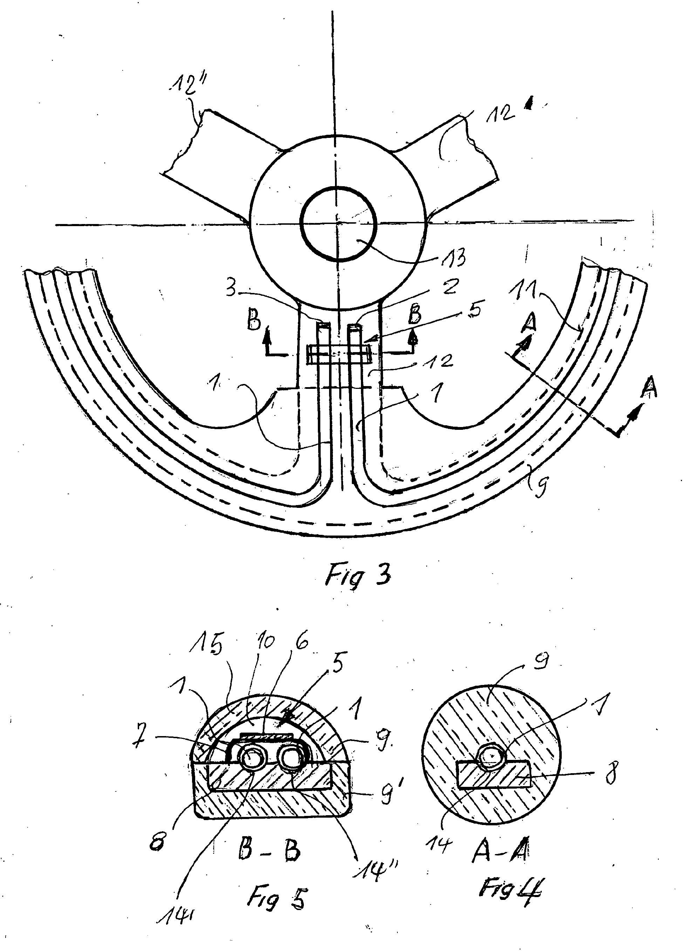

Die vorliegende Erfindung wird im Folgenden in den Einzelheiten unter Bezugnahme auf illustrierte Ausführungsbeispiele und Anwendungsbeispiele der Erfindung beschrieben. Die Abbildungen zeigen in den Figuren:
1 eine schematische Darstellung im Schnitt längs der Linie II - II der Fig. 2 einer Vorrichtung zum Aufnehmen der Schwankung des Druckes gemäss der vorliegenden Anmeldung;
2 einen Schnitt durch die Vorrichtung längs der Linie I - I der Fig. 1 ;
3 eine rein schematische Darstellung zum besseren Verständnis anhand einer Anwendung der erfindungsgemässen Vorrichtung im Lenkrad eines Fahrzeugs;
4 einen Schnitt längs der Linie A - A der Fig. 3 ;
5 einen Schnitt längs der Linie B - B der Fig. 3 ;
6 eine detaillierte perspektivische Ansicht einer bevorzugten Ausbildungsform der erfindungsgemässen Vorrichtung, die ebenfalls von der Art des Lenkorgans eines Fahrzeugs unabhängig ist, auf dem diese angewendet wird.

In den Figuren 1 und 2 sind in schematischen Schnitt-Darstellungen alle wesentlichen Elemente dargestellt, unabhängig von der Art deren Anwendung in einem Fahrzeug. Hier sei bereits festgehalten, dass weil die Anwendungen der erfindungsgemässen Vorrichtung in einem Fahrzeug - das ein Automobil, ein Motorrad, ein Lenkrad eines Fahrzeugs oder beispielsweise ein Sessel sein kann - sehr verschieden sind, auch deren praktische Realisierungsformen ganz verschiedene Formen annehmen können, wie dies aus der detaillierten Beschreibung der Erfindung ersichtlich wird. Die Figuren 1 und 2 zeigen daher die in jeder Ausführungs vorliegenden Erfindung vorhandenen grundlegenden Elemente.

In den Figuren 1 und 2 , in welchen erstere einen Schnitt längs der Linie II - II der Fig. 2, und letztere einen Schnitt längs der Linie I - I der Fig. 1 zeigt, ist mit 1 ein flexibler Schlauch bezeichnet, der mit Flüssigkeit gefüllt ist, wie beispielsweise in der EP-1621442 beschrieben. Der flexible Schlauch 1 gemäss der vorliegenden Erfindung ist im Unterschied zu jenem, der im Stand der Technik beschrieben ist, an beiden Enden 2 und 3 auf irgendeine Weise verschlossen, beispielsweise mittels "Verschlusszapfen", wie dies in der Fig. 1 dargestellt ist, oder mittels Klemmbriden, usw.

Der an irgendeinem Ort zwischen den Enden 2 und 3 auf den Schlauch 1 ausgeübte Druck, beispielsweise durch einen Finger 4 einer Hand (lediglich als

Beispiel angedeutet; in der Regel handelt es sich um eine ganze Anzahl Finger der Hand) wird erfindungsgemäss mittels einem Aufnahmegerät 5 für Druckschwankungen aufgenommen, das einen Dehnungsmesser 6 umfasst, dessen Verformung durch Dehnung und/oder Biegung infolge der Druckzunahme im Schlauch 1 gegenüber dem vorher im Schlauch herrschenden Druck in ein elektrisches Signal umgewandelt wird, dessen Stärke einen Messwert für den an einem beliebigen Punkt längs des flexiblen Schlauchs 1 herrschenden Druck darstellt

Zwei kennzeichnende Punkte der vorliegende Erfindung sind zu unterstreichen, nämlich:
1) die Verwendung von Dehnungsmessern, die auf Verlängerung und/oder Biegung reagieren, ist gemäss dem Stand der Technik bekannt und wird für viele Zwecke eingesetzt. Normalerweise handelt es sich um dünne Streifen aus geeignetem Material, die auf einem elastischen Träger angebracht werden, der durch Dehnung und/oder Biegung deformiert wird, so dass die auf ein bestimmtes mechanisches Element ausgeübten Spannungen gemessen werden können. In dem in den Figuren 1 und 2 gezeigten Fall wird der Dehnungsmesser 6 auf die obere Aussenseite eines U-förmig gebogenen metallischen Blechsteifen geklebt, wie dies mit 7 in den Figuren 1 und 2 angedeutet ist, und welche sich auf die Aussenfläche des Schlauches 1 abstützt und daher durch ein Aufblähen nach oben verformt wird, wenn der Druck im Schlauch 1 ansteigt.
2) der Schlauch 1 steht immer unter einem leichten Anfangsdruck, der sicherstellt, dass der Anfangswert der Druckschwankung immer einem vorbestimmten Druck entspricht und daher nicht durch eine allfällige Luftblase beeinflusst werden kann, die im Schlauch 1 eingeschlossen sein könnte, wie dies der Fall sein könnte, wenn der Anfangsdruck gleich dem atmosphärischen Druck gewesen wäre. Die Schwankungen des Druckes beziehen sich daher immer auf einen konstanten Anfangsdruck, dem die im Schlauch befindliche Flüssigkeit ausgesetzt ist.

Die Figuren 1 und 2 basieren auf den Erkenntnissen gemäss dem Stand der Technik, und insbesondere der EP-1621442, aus der ersichtlich ist, wie der Schlauch 1 mindestens im Bereich der Aufnahme der Druckschwankung abgestützt ist, einerseits durch eine starre Einlage 8, die beispielsweise ein metallischer Skelettrahmen eines Lenkradrahmens sein kann oder eine Griffstange einer Lenkstange, wie dies in den verschiedenen genannten Publikationen gezeigt ist, die den Stand der Technik darstellen.

Mit 9 ist ferner eine Schicht eines elastischen Materials, in welcher der flexible flüssigkeitsgefüllte Schlauch 1 im Griffbereich der Lenkorgans eines Fahrzeugs befestigt ist, wie dies gemäss dem Stand der Technik bekannt und in den abhängigen Ansprüchen 6 bis 9 der vorliegenden Erfindung beansprucht ist, deren Deformation unter dem Druck, den der Lenker oder eine beispielsweise auf einem Sessel sitzende Person (siehe Stand der Technik) ausübt, eine lokale Verformung des flexiblen Schlauchs 1 und einen Anstieg des Innendrucks im Schlauch hervorruft. Auch ist festzuhalten, dass der Druck-Aufnehmer 5 vorzugsweise- wenn auch nicht zwingend - in einer Kammer 10 angeordnet ist, in welcher die elastische Materialschicht 9 nicht vorhanden ist, so dass sich der Druck-Aufnehmer 5 frei verformen kann. Diese Bedingung ist jedoch nicht unabdingbar, kann aber sicherstellen, dass die Reaktion des Druck-Aufnehmers 5 einerseits ohne äussere Einflüsse erfolgt, und dass anderseits der Druck-Aufnehmer 5 leichter zugänglich bleibt, wann immer dies erwünscht ist. Dies sind zwar nur Nebenaspekte der vorliegenden Erfindung, mit welchen jeder Faschmann auf dem Gebiet vertraut ist und über die hier keine weitere Diskussion erforderlich ist.

Die Vorteile der erfindungsgemässen Lösung sind vor allem darin zu sehen, dass der Druck-Aufnehmer zum Bestimmen den Druck im Schlauch 1 nicht mehr mit einem Ende des Schlauchs 1 verbunden ist, wie es bei allen gemäss dem Stand der Technik bekannten Lösungen der Fall war, mit allen dabei auftretenden Problemen der hermetischen Flüssigkeitsabdichtung des Schlauches 1. Der Druck-Aufnehmer 5 zum Bestimmen der Druckschwankungen reagiert von ausserhalb auf die Verformungen des Schlauches 1 und kommt nie mit der Flüssigkeit in Kontakt, mit der der Schlauch 1 gefüllt ist. Ferner erlaubt die vorgesehene Verwendung eines Dehnungsmessers 6 als Messorgan, also eines preisgünstigen und äusserst zuverlässigen Elementes, eine Senkung der Herstellkosten für die Vorrichtung sowie auch eine Erleichterung der Operation des Füllens des Schlauches 1 mit Flüssigkeit, die dadurch sicherer wird da es offensichtlich leichter ist, einen Schlauch ohne Blasenbildung zu füllen, wenn dieser an beiden Enden verschlossen wird, ohne dass man sich um seinen Anschluss an einen Druckaufnehmer kümmern muss, wie dies gemäss dem Stand der Technik vorgesehen war.

Gemäss einer Beispielanordnung ist sodann vorgesehen, dass die Vorrichtung 5 zum Aufnehmen der Druckschwankung an einem Ende 2 oder 3 des flexiblen Schlauchs 1 angebracht ist, der an beiden Enden 2 bzw. 3 hermetisch verschlossen ist. Diese Anordnung ist besonders günstig, wenn das Lenkorgan die Lenkstange eines Motorrades oder eines Motorrollers oder Scooters ist. Eine, in den Figuren 3, 4 und 5 dargestellte Ausführungsform der vorliegenden Erfindung, die als bevorzugte Anwendung im Unteranspruch 7 beansprucht ist, sieht sodann vor, dass die beiden Enden 2 bzw. 3 des Schlauches 1 am gleichen Ort befestigt sein sollen, und dass der Druck-Aufnehmer 5 am diesem Ort über den beiden Enden 2 bzw. 3 des Schlauches 1 angeordnet sein soll.

Dieser in den Figuren 3, 4 und 5 gezeigte Fall zeigt in der Fig. 3 schematisch ein Lenkrad 11 eines Fahrzeugs, das drei Speichen 12, 12' und 12" aufweist, die es mit der zentralen Nabe 13 verbinden.

Der flexible flüssigkeitgefüllte Schlauch 1 ist im Lenkrad 11 über dessen ganzen Umfang eingebaut und ist auf der einen Seite abgestützt auf dem metallischen Skelettrahmen 8 (siehe die Figuren 4 und 5, welche zwei Schnitte längs den Linien A - A bzw. B - B der Fig. 3 zeigen) der die starre Struktur des Lenkrades 11 bildet, und auf den drei Speichen 12, 12', 12". Aus den Figuren 4 und 5 ist sodann auch ersichtlich, wie entsprechend einer bevorzugten Lösung, die für den Erfindungszweck nicht unabdingbar ist, und die hauptsächlich bezweckt, die Herstellung des Lenkrades 11 zu erleichtern, das Skelett 8 längs des Umfangs des Lenkrades 11 eine Nut 14 aufweist, die sich dann im Skelettrahmen 8 bzw. in seiner Speiche 12 in zwei Nuten 14' bzw. 14" verdoppelt, in welchen die beiden Endabschnitte 2 bzw. 3 des Schlauches 1 untergebracht werden.

Diese Nuten 14, 14' und 14" bezwecken eine Erleichterung des Einbaus des Schlauches 1 in den Skelettrahmen 8 des Lenkrades 11 vor dem Aufschäumen des elastischen Materials 9, d. h. sie dienen dem korrekten Positionieren des flexiblen Schlauches 1 im Skelettrahmen 8 des Lenkrades 11.

Der Schnitt B - B gemäss der Fig. 3 ist in der Fig. 5 gezeigt und erlaubt eine bessere Darstellung des Aufbaus des Druck-Aufnehmers 5 für die Druckschwankungen, welcher gemäss einer bevorzugten Ausführungsform der vorliegenden Erfindung zwei Plättchen 6 und 7 (siehe auch Fig. 2 und die zugehörige Beschreibung) umfasst, wovon das eine Plättchen (7) flexibel ist und das andere (6) den eigentlichen Druck-Aufnehmer bildet. Die beiden Plättchen 6 und 7 stützen sich auf dem Schlauch 1 ab und drücken ihn im Ruhezustand etwas ein und deformieren ihn unter einem bestimmten anfänglichen Druck leicht - wie dies sowohl aus der Fig. 2 als auch aus der Fig. 3 gut ersichtlich ist. Der Dehnungsmesser 6 ist auf dem elastischen Plättchen 7 in solcher Weise befestigt, dass er die Verformungen infolge der Druckzunahme im Schlauch 1 gegenüber dem anfänglich im Schlauch 1 herrschenden Druck mitmacht.

In dieser bevorzugten Ausführungsform der Erfindung ist sodann vorgesehen, dass der Dehnungsmesser 6 auf der Oberfläche des flexiblen Plättchen 7 befestigt ist, welche jener Seite gegenüberliegt, mit welcher das Plättchen 7 mit dem flexiblen Schlauch 1 in Kontakt tritt, wie dies alles in der Fig. 5 gezeigt ist. Dank der Anordnung des Druck-Abnehmers 5 für die Druckschwankungen über den beiden Enden 2 bzw. 3 des Schlauches 1 kann eine bessere Genauigkeit der Messung der Schwankungen erreicht werden, weil die Messung bei beiden Endstücken 2 bzw. 3 des Schlauches 1 erfolgt und dadurch unabhängig von den Orten wird, wo ein allfälliger Druck auf das Lenkrad 11 ausgeübt wird.

Aus der Fig. 5 wird eine weitere erfindungsgemässe Realisierungsmöglichkeit ersichtlich, bei welcher man leichten Zugang zum Druck-Aufnehmer 5 finden kann, um allfällige Unterhaltsarbeiten ausführen zu können. Zu diesem Zweck ist die bereits im Zusammenhang mit den Figuren 1 und 2 beschriebene Kammer 10 in zwei Teile aufgeteilt bzw. mit einem abnehmbaren Deckel 15 versehen, der auf beliebige Weise am unteren Teil 9' befestigt ist, und den Zugang zu dem auf dem Plättchen 7 befestigten Dehnungsmesser freigibt, wenn er abgenommen wird.

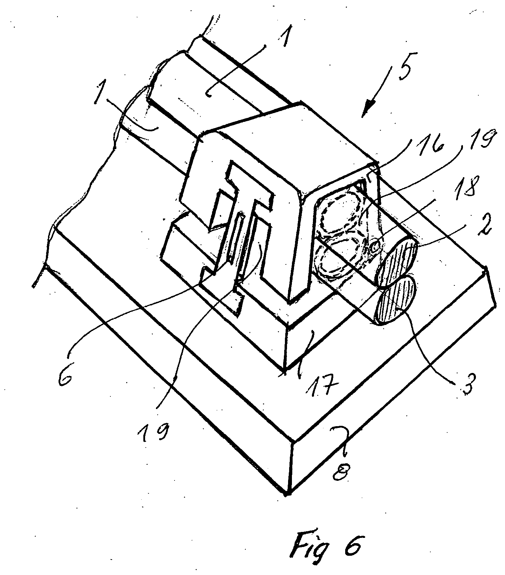

Eine weitere bevorzugte Ausführungsform der erfindungsgemässen Vorrichtung ist sodann in der Fig. 6 gezeigt, in welcher die gleichen Elemente wie in den Figuren 1 bis 5 mit den gleichen Bezugsziffern bezeichnet sind. In dieser Version der Erfindung besteht der Druck-Aufnehmer 5 aus zwei Teilen 16 und 17, die sich auf um einen Drehpunkt 18 gegenseitig neigen können. Zwischen den beiden Teilen 16 und 17 bildet sich eine Kammer 19, in der die beiden Enden 2 bzw.3 des Schlauches 1 nebeneinander untergebracht werden, wobei dessen Verformung infolge der Zunahme des Druckes im Schlauch 1 gegenüber dem anfänglich im Schlauch 1 im "Ruhezustand" herrschenden Druck eine Neigung eines Teils 16 gegenüber dem andern Teil 17 hervorruft. Zwischen den Teilen 16 und 17 ist ein Dehnungsmesser 6 befestigt, der den Anstieg der Spannung misst, wenn die beiden Teile 16 und 17 sich gegen einander zu neigen beginnen, und der diese Spannung in ein elektrisches Signal umformt, das ein Mass für den auf irgendeine Stelle des flexiblen Schlauches 1 ausgeübten Druck darstellt.

Diese Lösung bietet die Eigenschaft, sehr verlässlich und empfindlich zu sein und ist wegen ihres grösseren Raumbedarfs gegenüber den Lösungen gemäss den Figuren 1 bis 5 besonders geeignet, wenn die Vorrichtung wie im Anspruch 11 vorgesehen angewendet wird, um den Druck festzustellen, den eine auf dem Sessel eines Fahrzeugs sitzende Person ausübt. Auch in diesem Fall bleibt die Funktion der erfindungsgemässen Vorrichtung genau gleich wie jener, die für ein Lenkungsorgan (Lenkrad oder Lenkstange) beschrieben wurde. Dies kann jedoch den Zweck der Erfindung insofern ändern als er von einer Sicherheitsvorrichtung zu einer Kontrollvorrichtung wechselt, beispielsweise im Zusammenhang mit dem Funktionieren eines Airbags.

Die Anwendungen der erfindungsgemässen Vorrichtung können sehr verschieden sein und von einem einfachen Kontrollgerät für bestimmte technische Funktionen in einem Fahrzeug (Motorrad, Automobil, Boot, Flugzeug, usw.) bis zu einer eigentlichen Sicherheitseinrichtung zum Messen der Reaktionsfähigkeit eines Fahrzeuglenkers oder eines Piloten reichen.

Die abhängigen Ansprüche 6 bis 9 betreffen eine nicht erschöpfende Lösung für ähnliche bevorzugte Anwendungen.

### Liste der in den Figuren verwendeten Bezugsziffern

1 flexibler Schlauch
2 Ende des Schlauchs
3 Ende des Schlauchs
4 Finger einer Hand
5 Aufnehmer für die Schwankung des Drucks
6 Dehnungsmesser in Form eines Plättchens
7 Metallblechstreifen oder Plättchen
8 starre Einlage bzw. metallisches Skelett
9 elastisches Material
10 Kammer
11 Lenkrad
12, 12', 12" Speichen des Lenkrades
13 Nabe des Lenkrades
14, 14', 14" Nuten
15 Deckel der Kammer 10
16 Teil
17 Teil
18 Drehpunkt
19 Kammer

## Patentansprüche

1. Vorrichtung zum Aufnehmen der Schwankung eines Druckes, die einem flexiblen flüssigkeitsgefüllten Schlauch (1) und einem Aufnehmer (5) für Schwankungen des Druckes umfasst, wobei der Schlauch (1) an seinen beiden Enden (2,3) hermetisch verschlossen ist, wobei der von aussen auf eine beliebige Stelle zwischen den beiden Enden (2, 3) einwirkende Druck mittels des Aufnehmers (5) für Schwankungen des Drucks aufgenommen wird, und wobei der Aufnehmer (5) einen Dehnungsmesser (6) enthält, dessen Verformung durch Dehnung und/oder Biegung infolge der Zunahme des Drucks im Schlauch (1) gegenüber der anfänglich im Schlauch (1) herrschenden Druck in ein elektrisches Signal umgewandelt wird, dessen Stärke ein Mass für den an irgendeiner Stelle des flexiblen Schlauchs (1) herrschenden Druck darstellt, **dadurch gekennzeichnet, dass** die beiden Enden (2 bzw. 3) des Schlauchs (1) am gleichen Ort angeordnet sind, und dass der Aufnehmer (5) für Schwankungen des Drucks dementsprechend über den beiden Enden (2 bzw. 3) des Schlauchs (1) angeordnet ist, so dass die Messung der Schwankungen bei beiden Endstücken des Schlauchs (1) erfolgt.

2. Vorrichtung zum Aufnehmen der Schwankung eines Drucks gemäss dem Anspruch 1,
**dadurch gekennzeichnet, dass**
der Aufnehmer (5) für Schwankungen des Drucks aus zwei Plättchen (6, 7) besteht, deren eines (7) flexibel ist und deren anderes (6) den Dehnungsmesser bildet, die sich auf dem Schlauch (1) abstützen und ihn im Ruhezustand bei einem vorbestimmten Anfangsdruck leicht verformen, und dass der Dehnungsmesser in solcher Weise am flexiblen Plättchen (7) befestigt ist, dass er die Verformungen mitmacht, die infolge der Zunahme des Druckes im Schlauch (1) gegenüber dem anfänglich im Schlauch (1) herrschenden Druck entstehen.

3. Vorrichtung zum Aufnehmen der Schwankung eines Drucks gemäss dem Anspruch 2,
**dadurch gekennzeichnet, dass**
der Dehnungsmesser (6) auf der Oberfläche des flexiblen Plättchens (7) befestigt ist, die jener gegenüber liegt mit welcher das Plättchen (7) mit dem flexiblen Schlauch (1) im Kontakt steht.

4. Vorrichtung zum Aufnehmen der Schwankung eines Drucks gemäss den Ansprüchen 2 und 3,
**dadurch gekennzeichnet, dass**
die beiden Plättchen (6, 7) sich auf den beiden Enden (2 bzw. 3) des Schlauches (1) so abstützen, dass die Schwankung des Druckes gleichzeitig in beiden Enden des Schlauches (1) aufgenommen wird.

5. Vorrichtung zum Aufnehmen der Schwankung eines Drucks gemäss dem Anspruch 1,
**dadurch gekennzeichnet, dass**
der Aufnehmer (5) für Schwankungen des Drucks aus zwei Teilen (16, 17) besteht, die sich in einem Drehpunkt (18) gegeneinander neigen können, wobei sich zwischen den beiden Teilen (16, 17) eine Kammer (19) bildet, welche die Bereiche nahe bei den beiden Enden (2 bzw. 3) des Schlauches (1) aufnimmt, deren Verformungen infolge des Anstiegs des Druckes im Schlauch (1) gegenüber dem anfänglich im Schlauch herrschenden Druck eine Neigung des einen Teils (17) gegenüber dem andern Teil (16) hervorrufen, wobei zwischen den beiden Teilen (16, 17) ein Dehnungsmesser (6) befestigt ist, der den Anstieg der Spannung misst, wenn die beiden Teile (16, 17) sich voneinander wegneigen, und der diese Spannung in das elektrische Signal umformt, das die Messung des an irgendeinem Punkt des flexiblen Schlauchs (1) von aussen einwirkenden Druckes darstellt.

6. Lenkorgan eines Fahrzeuges,
**dadurch gekennzeichnet, dass**
in dem Lenkorgan eine Vorrichtung zum Aufnehmen der Schwankung eines Drucks gemäss einem der Ansprüche 1 bis 5 eingebaut ist.

7. Lenkorgan gemäss dem Anspruch 6,
**dadurch gekennzeichnet, dass**
das Lenkorgan das Lenkrad eines Automobils ist.

8. Lenkorgan gemäss dem Anspruch 6,
**dadurch gekennzeichnet, dass**
das Lenkorgan die Lenkstange eines Motorrades oder eines Motorrollers (Scooters) ist.

9. Sessel eines Automobils, **dadurch gekennzeichnet**, das seine Vorrichtung zum Aufnehmen der Schwankung eines Drucks gemäss der Ansprüche 1 bis 5
in dem Sessel eingebaut ist und dazu dient, die Anwesenheit einer Person auf dem Sessel festzustellen.

## Claims

1. A device for sensing pressure fluctuations, which comprises a flexible liquid-filled tube (1) and a transducer (5) of pressure fluctuations, wherein
the tube (1) is hermetically closed at both its ends (2, 3), wherein the pressure acting from outside at any point between both ends (2,3) is sensed by means of the transducer (5) of pressure fluctuations and wherein the transducer (5) contains a strain gauge (6), the deformation of which is converted, via a dilation and/or bending due to a pressure increase in the tube (1) with respect to the pressure initially present in the tube (1), into an electric signal, the intensity of which represents a measure of pressure present at any point of the flexible tube (1), **characterized in that**
both ends (2 or 3) of tube (1) are positioned at the same location, and that the transducer (5) of pressure fluctuations is correspondingly arranged over both ends (2 or 3) of tube (1), so that the measurement of fluctuations takes place at both end portions of the tube (1).

2. The device for sensing pressure fluctuations according to claim 1,
**characterized in that**
the transducer (5) of pressure fluctuations is composed of two plates (6, 7), one (7) of which is flexible and the other (6) forms the strain gauge, wherein both are supported by the tube (1) and slightly deform the same at rest at a predetermined initial pressure, and that the strain gauge is secured to the flexible plate (7) in such a way to follow the deformations which occur due to a pressure increase inside the tube (1) with respect to the initial pressure inside the tube (1).

3. The device for sensing pressure fluctuations according to claim 2,
**characterized in that**
the strain gauge (6) is secured to the surface of the flexible plate (7), which is opposite the surface of the plate (7) which is contacting the flexible tube (1).

4. The device for sensing pressure fluctuations according to claims 2 and 3,
**characterized in that**
both plates (6, 7) are supported on both ends (2 or 3) of tube (1) in such a way that the pressure fluctuation is simultaneously sensed in both ends of tube (1).

5. The device for sensing pressure fluctuations according to claim 1,
**characterized in that**
the transducer (5) of pressure fluctuations is composed of two parts (16, 17), which may incline with respect to each other about a center of rotation (18), wherein a chamber (19) is formed between both parts (16, 17), which chamber houses the regions near both ends (2 or 3) of tube (1), the deformations of which cause an inclination of one part (17) with respect to the other part (16) due to an increase of pressure inside the tube (17) with respect to the initial pressure inside the tube, wherein a strain gauge (6) is secured between both parts (16, 17) and measures the increase in voltage, when both parts (16, 17) incline away from each other, and which converts this voltage into an electrical signal, which represents the measurement of pressure acting from outside at any point of flexible tube (1).

6. A steering element of a vehicle,
**characterized in that**
a device for sensing pressure fluctuations according to any of claims 1 to 5 is mounted within the steering element.

7. The steering element according to claim 6,
**characterized in that**
the steering element is the steering wheel of an automobile.

8. The steering element according to claim 6,
**characterized in that**
the steering element is the handlebar of a motorcycle or a motor scooter (scooter).

9. A seat of an automobile, **characterized in that** its device for sensing pressure fluctuations according to claims 1 to 5 is mounted inside the seat and is provided for detecting the presence of a person on the seat.

## Revendications

1. Dispositif pour détecter la variation d'une pression, qui comprend un tuyau flexible (1) rempli de liquide et un détecteur (5) de variations de la pression, sachant que le tuyau (1) est hermétiquement fermé à ses deux extrémités (2, 3), sachant que la pression agissant de l'extérieur en un point quelconque entre les deux extrémités (2, 3) est détectée au moyen du détecteur (5) de variations de la pression, et sachant que le détecteur (5) comprend un extensomètre (6) dont la déformation par extension et/ou flexion par suite de l'augmentation de la pression dans le tuyau (1) par rapport à la pression régnant initialement dans le tuyau (1) est transformée en un signal électrique dont la puissance constitue une mesure de la pression régnant en un endroit quelconque du tuyau flexible (1), **caractérisé en ce que** les deux extrémités (respectivement 2, 3) du tuyau (1) sont disposées au même endroit, et **en ce que** le détecteur (5) de variations de la pression est donc disposé au-dessus des deux extrémités (respectivement 2, 3) du tuyau (1), de sorte que la mesure des variations s'effectue au niveau des deux embouts du tuyau (1).

2. Dispositif pour détecter la variation d'une pression selon la revendication 1, **caractérisé en ce que** le détecteur (5) de variations de la pression est constitué de deux plaquettes (6, 7), dont l'une (7) est flexible et dont l'autre (6) forme l'extensomètre, qui s'appuient sur le tuyau (1) et le déforment légèrement dans l'état de repos en présence d'une pression initiale prédéterminée, et **en ce que** l'extensomètre est fixé sur la plaquette flexible (7) d'une manière telle qu'il accompagne les déformations qui apparaissent par suite de l'augmentation de la pression dans le tuyau (1) par rapport à la pression régnant initialement dans le tuyau (1).

3. Dispositif pour détecter la variation d'une pression selon la revendication 2, **caractérisé en ce que** l'extensomètre (6) est fixé sur la surface de la plaquette flexible (7) qui est opposée à celle par laquelle la plaquette (7) est en contact avec le tuyau flexible (1).

4. Dispositif pour détecter la variation d'une pression selon les revendications 2 et 3, **caractérisé en ce que** les deux plaquettes (6, 7) s'appuient sur les deux extrémités (respectivement 2, 3) du tuyau (1) de telle sorte que la variation de la pression est détectée simultanément dans les deux extrémités du tuyau (1).

5. Dispositif pour détecter la variation d'une pression selon la revendication 1, **caractérisé en ce que** le détecteur (5) de variations de la pression est constitué de deux parties (16, 17) qui peuvent s'incliner l'une par rapport à l'autre en un point de rotation (18), sachant qu'une chambre (19) se forme entre les deux parties (16, 17), laquelle reçoit les régions proches des deux extrémités (respectivement 2, 3) du tuyau (1), dont les déformations par suite de l'augmentation de la pression dans le tuyau (1) par rapport à la pression régnant initialement dans le tuyau (1) provoquent une inclinaison de l'une (17) des parties par rapport à l'autre partie (16), sachant qu'un extensomètre (6) est fixé entre les deux parties (16, 17), qui mesure l'augmentation de la tension lorsque les deux parties (16, 17) s'inclinent en éloignement l'une de l'autre, et qui transforme cette tension en un signal électrique qui représente la mesure de la pression agissant de l'extérieur en un point quelconque du tuyau flexible (1).

6. Organe de direction d'un véhicule, **caractérisé en ce qu'**un dispositif pour détecter la variation d'une pression selon l'une des revendications 1 à 5 est installé dans l'organe de direction.

7. Organe de direction selon la revendication 6, **caractérisé en ce que** l'organe de direction est le volant de direction d'une automobile.

8. Organe de direction selon la revendication 6, **caractérisé en ce que** l'organe de direction est le guidon d'une motocyclette ou d'un scooter.

9. Siège d'une automobile, **caractérisé en ce que** son dispositif pour détecter la variation d'une pression selon l'une des revendications 1 à 5 est installé dans le siège et sert à déterminer la présence d'une personne sur le siège.
